# EUROPEAN PATENT APPLICATION

(11) **EP 3 093 775 A1**
(43) Date of publication of application: **16.11.2016**
(21) Application number: 15199503.2
(22) Date of filing: 11.12.2015
(51) Int. Cl.: G06F 17/30, G10L 25/54, G10L 15/26, G10L 17/26

(54) **METHOD AND APPARATUS FOR SPEECH-BASED INFORMATION PUSH**

(30) Priority: 15.05.2015 CN 201510251387
(71) Applicant: Baidu Online Network Technology Beijing Co., Ltd., Beijing 100085 (CN)
(72) Inventor: CAO, Haijun, 100085 Beijing (CN); QI, Anlong, 100085 Beijing (CN); WANG, Kai, 100085 Beijing (CN)
(74) Representative: Bergmeier, Werner

(57) **Abstract**

The present invention discloses a method and apparatus for speech-based information pushing, wherein the method comprises: receiving a speech; extracting at least one personalized feature from the speech; pushing to-be-sent information to a user corresponding to the speech based on the at least one speech feature information. By pushing the to-be-sent information based on speech feature information in the speech, the method may provide targeted personalized services dependent on different user features, which enhances the accuracy of information push and satisfies the user's personalized needs.

## Description

### CROSS REFERENCE TO RELATED APPLICATIONS

This application claims priority to Chinese patent application No. 201510251387.2, filed on May 15, 2015, titled "Method and Apparatus for Speech-Based Information Push", which is hereby incorporated herein by reference in its entirety.

### FIELD OF THE INVENTION

The present invention relates to the field of computers, and more specifically relates to a method for speech-based information push.

### BACKGROUND OF THE INVENTION

Expeditious development of speech recognition technologies boost wide usage of applications such as speech search, speech navigation, and speech shopping. Currently, common speech instruction-based services are all converting speech instructions into characters, and then services such as search, navigation, and shopping are performed based on character contents. However, the search, navigation, and shopping performed based on the character contents cannot provide targeted personalized services based on different user features.

### SUMMARY OF THE INVENTION

One of the technical problems being solved by the present invention is that existing speech-based services cannot provide targeted personalized services dependent on different user features.

According to one embodiment of one aspect of the present invention, there is provided a method for speech-based information push, comprising:
receiving a speech;
extracting at least one personalized feature from the speech;
pushing to-be-sent information to a user corresponding to the speech based on the at least one personalized feature.

According to one embodiment of another aspect of the present invention, there is provided an apparatus for speech-based information push, comprising:
a module configured to receive a speech;
a module configured to extract at least one personalized feature from the speech;
a module configured to push to-be-sent information to a user corresponding to the speech based on the at least one personalized feature.

Because the present embodiments push the to-be-sent information based on personalized feature in the speech, targeted personalized services may be provided dependent on different user features, which enhances the accuracy of information push and satisfies the user's personalized needs.

A person of normal skill in the art would understand that although the following detailed depiction will refer to the illustrative embodiments and drawings, the present invention is not limited to these embodiments. Instead, the scope of the present invention is wide, and intends to limit the scope of the present invention only through the appended claims.

### BRIEF DESCRIPTION OF THE ACCOMPANYING DRAWINGS

Other features, objectives, and advantages of the present invention will become more apparent through reading the following detailed description of the non-limitative embodiments with reference to the accompanying drawings:
- **Fig. 1**: shows a flow diagram of a method for speech-based information push based on one embodiment of the present invention;
- **Fig. 2**: shows a specific flow diagram of step S130 in the method for speech-based information push according to one embodiment of the present invention;
- **Fig. 3**: shows a flow diagram of a further method for speech-based information push according to one embodiment of the present invention;
- **Fig. 4**: shows a specific flow diagram of step S330 in the further method for speech-based information push according to one embodiment of the present invention;
- **Fig. 5**: shows a block diagram of an apparatus for speech-based information push according to one embodiment of the present invention;
- **Fig. 6**: shows a block diagram of a further apparatus for speech-based information push according to one embodiment of the present invention.

In the accompanying drawings, same or similar reference numerals represent same or similar components.

### DETAILED DESCRIPTION OF THE PREFERRED EMBODIMENTS

It should be noted before discussing exemplary embodiments in more detail that some exemplary embodiments are described as a processing or method depicted in a flow diagram. Although respective operations are described to be processed in sequence in the flow diagram, some operations may be implemented in parallel, concurrently or simultaneously. Besides, the orders of respective operations may be re-arranged. When the operations are completed, the processing may be terminated, but there may still have additional steps not included in the accompanying drawings. The processing may correspond to a method, a function, a specification, a sub-routine, a sub-program, etc.

The "computer device" in the context, also referred to as "computer," refers to an intelligent electronic device that performs a predetermine processing process such as numerical computation and/or logical computation by executing a predetermined program or instruction, which may comprise a processor and a memory, such that the process executes the predetermined processing process by executing a pre-stored program instruction in the memory, or executes a predetermined processing process by hardware such as ASIC, FPGA, DSP, etc., or implemented by a combination of both. The computer device includes, but not limited to a server, a personal computer, a laptop computer, a tablet computer, and a smart phone, etc.

The computer device comprises a user equipment and a network device, wherein the user equipment includes, but not limited to, a computer, a smart phone, a PDA, etc.; the network device includes, but not limited to, a server group consisting of a single network server or a plurality of network servers, or a cloud consisting of mass computers or network servers based on cloud computing, wherein cloud computing is a kind of distributed computing, which is a super virtual computer consisting of a group of loosely coupled computer sets, wherein the computer device may independently run to implement the present invention, wherein the network where the computer device is located includes, but not limited to, Internet, Wide Area Network, Metropolitan Area Network, Local Area Network, VPN network, etc.

It should be noted that the user equipment, network device, and network are only examples, and other existing or future possibly emerging computer devices or networks, if applicable to the present invention, should also be included within the protection scope of the present invention and are incorporated here by reference.

The methods discussed infra (some of which are illustrated through flow diagrams) may be implemented through hardware, software, firmware, middleware, microcode, hardware description language or any combination thereof. When they are implemented with software, firmware, middleware or microcode, the program code or code segment for executing essential tasks may be stored in a machine or a computer readable medium (e.g., storage medium). (One or more) processors may implement essential tasks.

The specific structures and function details disclosed here are only representative, for a purpose of describing the exemplary embodiments of the present invention. Instead, the present invention may be specifically implemented through many alternative embodiments. Therefore, it should not be appreciated that the present invention is only limited to the embodiments illustrated here.

However, it should be understood that although terms "first," "second" might be used here to describe respective units, these units should not be limited by these terms. Use of these terms is only for distinguishing one unit from another. For example, without departing from the scope of the exemplary embodiments, the first unit may be referred to as the second unit, and similarly the second unit may be referred to as the first unit. The term "and/or" used here includes any and all combinations of one or more associated items as listed.

It should be understood that when one unit is "connected" or "coupled" to a further unit, it may be directly connected or coupled to the further unit or an intermediate unit may exist. In contrast, when a unit is "directly connected" or "directly coupled" to a further unit, an intermediate unit does not exist. Other terms (e.g., "disposed between" VS. "directly disposed between," "adjacent to" VS. "immediately adjacent to," and the like) for describing a relationship between units should be interpreted in a similar manner.

The terms used here are only for describing preferred embodiments, not intended to limit exemplary embodiments. Unless otherwise indicated, singular forms "a" or "one" used here further intends to include plural forms. It should also be appreciated that the terms "comprise" and/or "include" used here prescribe existence of features, integers, steps, operations, units and/or components as stated, but do not exclude existence or addition of one or more other features, integers, steps, operations, units, components, and/or a combination thereof.

It should also be noted that in some alternative embodiments, the functions/actions as mentioned may occur in an order different from what is indicated in the drawings. For example, dependent on the functions/actions involved, two successively illustrated diagrams may be executed substantially simultaneously or in a reverse order sometimes.

Hereinafter, the present invention will be described in further detail.

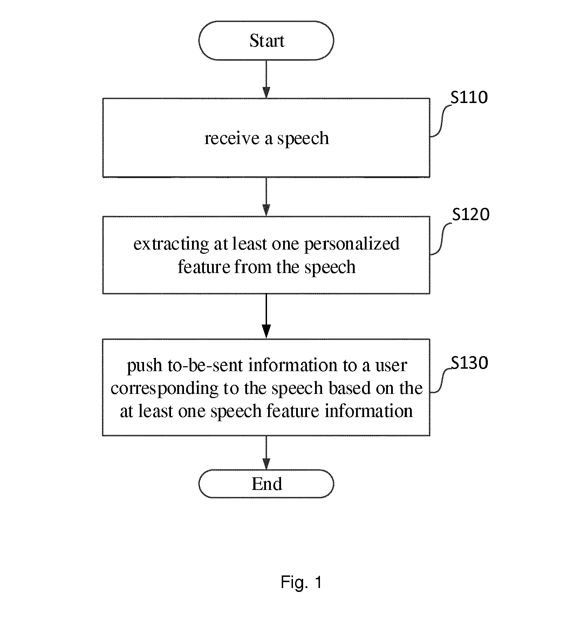

Fig. 1 shows a flow diagram of a method for speech-based information push based on one embodiment of the present invention;

As shown in conjunction with Fig. 1, the method for speech-based information push according to the present embodiment comprises the following steps:
S110: receiving speech;
S120: extracting at least one personalized feature from the speech;
S130: pushing to-be-sent information to a user corresponding to the speech based on the at least one personalized feature.

Hereinafter, detailed introduction will be made to respective steps.

In step S110, the speech may be speech inputted by a user through a man-machine interaction interface or a recording file as speech, or other form of speech. The embodiments of the present invention has no specific limitation on the manner of receiving the speech.

In step S120, extracting at least one personalized feature from the speech.

Specifically, personalized feature mainly includes tone, timber and/or loudness, wherein the tone is mainly determined by the frequency of the speech. Generally, the tone of a child is higher than an adult; the tone of a woman is higher than a man. The magnitude of loudness is determined by an amplitude of an object and a distance between a sounding object and a receiving object. The timber refers to a sensing feature of the speech. Due to the difference in the materials and structures of sounding bodies, the timbers of the speeches are also different. Alternatively, the personalized feature may also comprise a speed, vowel length, end word, and/or dialectic features, and the like, wherein the vowel length means a vowel may be pronounced longer or shorter by different users, the end word may be for example, " 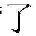 (Le,), 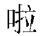 (La), which are modal particles," and the dialectic features may be for example, mixing of "l" and "n" in dialectics of a certain area of Hubei province, or indiscrimination of h and f in dialectics of Hunan or Fujian.

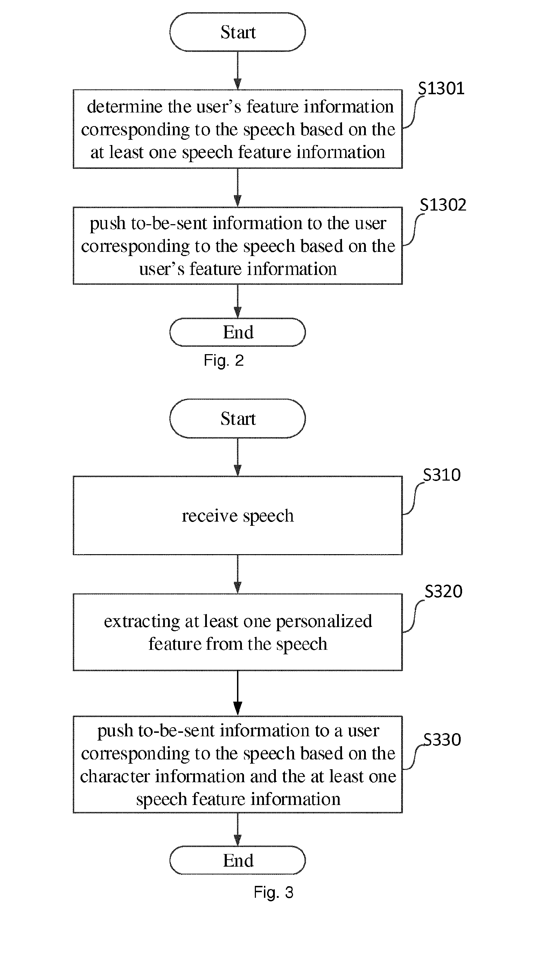

Alternatively, in one embodiment, as shown in Fig. 2, step S130 may specifically comprise the following steps:
Step S1301, determine the user's feature information corresponding to the speech based on the at least one personalized feature.

Specifically, the user's feature information may include: gender, age, health condition, dialectic, nationality, education degree (e.g., PHD, bachelor, high school, or primary school, etc.), occupation (e.g., cook, journalist, lawyer, etc.) and/or sentimental color, etc. The present invention does not make specific limitations on the user's specific feature information, as long as it can distinguish users into different user groups.

Alternatively, the user's feature information corresponding to the speech may be directly determined based on at least one personalized feature. For example, the user's gender or age may be determined based on the loudness of the tone, i.e., it may be determined based on the loudness of the tone whether the user is a male or a female, or an adult or a child, etc.

Alternatively, a speech sample library may be established first. The speech samples of the speech sample library are samples on the users with respect to different genders, ages, health conditions, dialectics, nationalities, education degrees, occupations and/or sentimental colors, etc., and then each speech sample in the speech sample library generates a multi-dimensional vector based on the personalized feature, each dimension of the vector corresponds the user's one feature information. Likewise, a multi-dimensional vector is generated in the same manner based on the personalized feature after receiving the speech, and the user's feature information is determined based on the multi-dimensional vector, e.g., the multi-dimension vector corresponding to the speech is vector multiplied with multi-dimension vectors corresponding to respective speech samples in the sample library, and which speech sample is most suitable is determined by normalizing the vector products, thereby determining the user's feature information.

The embodiments of the present invention do not specifically limit the method of directly determining the user's feature information corresponding to the user based on at least one personalized feature, and any method is applicable to the present invention as long as it can determine the user's feature information based on at least one personalized feature in the speech.

Step S1302, push to-be-sent information to the user corresponding to the speech based on the feature information of the user.

Specifically, if a first feature information corresponding to a first information in the to-be-sent information and the user's feature information are within a threshold range, the first information is pushed to the user corresponding to the speech.

Alternatively, each to-be-sent information is provided with the user's feature information or the user's feature information range; if the user's feature information corresponding to the speech and a user feature information set for the to-be-sent information are within the threshold range, or if the user feature information corresponding to the speech is within a user feature information range provided for the to-be-sent information, then the to-be-sent information is pushed to the user corresponding to the speech.

Alternatively, the to-be-sent information may also be pushed by multi-feature modeling, i.e., a weight variable is set for each user's feature information, and a quality score of each to-be-sent information is determined based on each user's feature information weight. Then each to-be-sent information is ordered based on their respective quality score and then pushed. With the increase of push results, the weight corresponding to each user's feature information is modified in real-time based on the push effect, so as to enhance the accuracy and preciseness of information pushing, thereby making the information push more accurate.

The embodiments of the present invention do not specifically limit the method of pushing the to-be-sent information to the user corresponding to the speech based on the user's feature information, and any method of pushing the to-be-sent information to a user who really needs or concerns the information may be applicable to the present invention as long as it can address different user needs.

In conjunction with Fig. 3, a further method for speech-based information pushing according to the present embodiment comprises steps of:
S310: receiving speech;
S320: obtaining at least one personalized feature in the speech, and converting the speech into character information;
S330: pushing to-be-sent information to a user corresponding to the speech based on the character information and the at least one personalized feature.

Hereinafter, further detailed introduction will be made to respective steps.

In step S310, the speech may be speech inputted by a user through a man-machine interaction interface or a recording file as speech, or other form of speech. The embodiments of the present invention has no specific limitation on the manner of receiving the speech.

In step S320, the procedure of obtaining at least one personalized feature in the speech may comprise:
Specifically, personalized feature mainly includes tone, timber and/or loudness, wherein the tone is mainly determined by the frequency of the speech. Generally, the tone of a child is higher than an adult; the tone of a woman is higher than a man. The magnitude of loudness is determined by an amplitude of an object and a distance between a sounding object and a receiving object. The timber refers to a sensing feature of the speech. Due to the difference in the materials and structures of sounding bodies, the timbers of the speeches are also different. Alternatively, the personalized feature may also comprise a speed, vowel length, end word, and/or dialectic features, and the like, wherein the vowel length means a vowel may be pronounced longer or shorter by different users, the end word may be for example, " 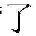 (Le,), 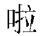 (La), which are modal particles," and the dialectic features may be for example, mixing of "l" and "n" in dialectics of a certain area of Hubei province, or indiscrimination of h and f in dialectics of Hunan or Fujian.

In step S320, the procedure of converting the speech into character information may be implemented by a speech recognition technology. The specific converting method is not specifically limited in the embodiments of the present invention, as long as the speech can be converted into characters.

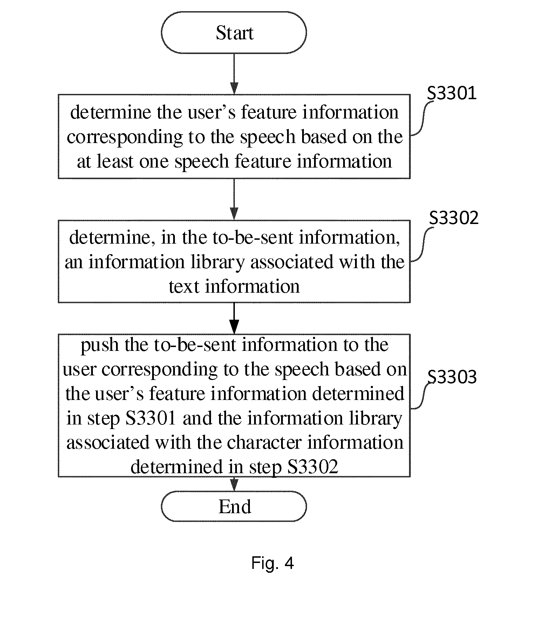

Alternatively, in one embodiment, as shown in Fig. 4, the step S330 may specifically comprise the following steps:
In step S3301, determining the user's feature information corresponding to the speech based on the at least one personalized feature.

Specifically, the user's feature information may include: gender, age, health condition, dialectic, nationality, education degree (e.g., PHD, bachelor, high school, or primary school, etc.), occupation (e.g., cook, journalist, lawyer, etc.) and/or sentimental color, etc. The present invention does not make specific limitations on the user's specific feature information, as long as it can distinguish users into different user groups.

Alternatively, the user's feature information corresponding to the speech may be directly determined based on at least one personalized feature. For example, the user's gender or age may be determined based on the loudness of the tone, i.e., it may be determined based on the loudness of the tone whether the user is a male or a female, or an adult or a child, etc.

Alternatively, a speech sample library may be established first. The speech samples of the speech sample library are samples on the users with respect to different genders, ages, health conditions, dialectics, nationalities, education degrees, occupations and/or sentimental colors, etc., and then each speech sample in the speech sample library generates a multi-dimensional vector based on the personalized feature, each dimension of the vector corresponds the user's one feature information. Likewise, a multi-dimensional vector is generated in the same manner based on the personalized feature after receiving the speech, and the user's feature information is determined based on the multi-dimensional vector, e.g., the multi-dimension vector corresponding to the speech is vector multiplied with multi-dimension vectors corresponding to respective speech samples in the sample library, and which speech sample is most suitable is determined by normalizing the vector products, thereby determining the user's feature information.

The embodiments of the present invention do not specifically limit the method of directly determining the user's feature information corresponding to the user based on at least one personalized feature, and any method is applicable to the present invention as long as it can determine the user's feature information based on at least one personalized feature in the speech.

Step S3302, determining, in the to-be-sent information, an information library associated with the text information.

Specifically, information, in the to-be-sent information, containing the text information may be used as an information library associated with the character information, or association degrees of the to-be-sent information with the text information according to a certain association degree calculation method may be ordered so as to use the information whose association degree is higher than a predetermined value as the information library associated with the text information. The present invention does not specifically limit the method of how to determine an information library associated with the character information, as long as any information having certain association with the character information may be put into the information library.

There is no limitation on the specific sequence of implementing step S3301 and step S3302. The information library associated with the character information may be first determined, and then the user's feature information is determined; or, the user's feature information may be first determined, and then the information library associated with the character information may be determined; or, they may be determined simultaneously.

Step S3303, push the to-be-sent information to the user corresponding to the speech based on the user's feature information determined in step S3301 and the information library associated with the character information determined in step S3302.

Alternatively, when the user's feature information is first determined, and then the information library associated with the character information is determined, there comprises:
Specifically, if the first feature information corresponding to a first information in the to-be-sent information and the user's feature information are within a threshold range, an information set satisfying the first information requirement is used as the information library associated with the user's feature information, and then in the information library associated with the user's feature information, an information library associated with the text information is further determined; finally, the to-be-sent information in the information library associated with the character information as determined in the information library associated with the feature information is pushed to the user corresponding to the speech.

Specifically, each to-be-sent information is provided with the user's feature information or the user's feature information range; if the user's feature information corresponding to the speech and a user feature information set for the to-be-sent information are within the threshold range, or if the user feature information corresponding to the speech is within a user feature information range provided for the to-be-sent information, it is determined that the to-be-sent information within the threshold range or within the user feature information range is used as the information library associated with the user's feature information, and then the information library associated with the character information is further determined in the information library associated with the user's feature information; and finally, the to-be-sent information in the information library associated with the character information as determined in the information library associated with the feature information is pushed to the user corresponding to the speech.

Alternatively, when the information library associated with character information is first determined, and then the user's feature information is determined, there comprises:
Specifically, if the first feature information corresponding to a first information in the information library associate with the character information and the user's feature information are within a threshold range, the to-be-sent information in the information set satisfying the first information requirement is pushed to the user corresponding to the speech.

Specifically, each to-be-sent information is provided with the user's feature information or the user's feature information range; if the user's feature information corresponding to the speech and a user feature information set for the to-be-sent information are within the threshold range, or if the user feature information corresponding to the speech is within a user feature information range provided for the to-be-sent information in the information library associated with the character information, then it is determined to push the to-be-sent information within the threshold range or within the user feature information range to the user corresponding to the speech.

Alternatively, the to-be-sent information may also be pushed by multi-feature modeling, i.e., a weight variable is set for each user's feature information, and a quality score of each to-be-sent information is determined based on each user's feature information weight. Then each to-be-sent information is ordered based on their respective quality score and then pushed. With the increase of push results, the weight corresponding to each user's feature information is modified in real-time based on the push effect, so as to enhance the accuracy and preciseness of information pushing, thereby making the information push more accurate.

The embodiments of the present invention do not specifically limit the method of pushing the to-be-sent information to the user corresponding to the speech based on the user's feature information, and any method of pushing the to-be-sent information to a user who really needs or concerns the information may be applicable to the present invention as long as it can address different user needs.

Alternatively, when the user's feature information and the information library associated with the character information are simultaneously determined, comprising:
Specifically, if the first feature information corresponding to a first information in the to-be-sent information and the user's feature information are within a threshold range, an information set satisfying the first information requirement is used as the information library associated with the user's feature information, and then after the information library associated with the user's feature information is intersected with the information library associated with the character information, the to-be-sent information in the intersection is pushed to the user corresponding to the speech.

Alternatively, each to-be-sent information is provided with the user's feature information or the user's feature information range; if the user's feature information corresponding to the speech and a user feature information set for the to-be-sent information are within the threshold range, or if the user feature information corresponding to the speech is within a user feature information range provided for the to-be-sent information, it is determined that the to-be-sent information within the threshold range or within the user feature information range is used as the information library associated with the user's feature information, and then the information library associated with the user's feature information is intersected with the information library associated with the character information; and finally, the to-be-sent information in the intersection is pushed to the user corresponding to the speech.

The embodiments of the present invention does not specifically limit a method of pushing the to-be-sent information based on the characteristic information and the at least one personalized feature, and any method may be applicable to the present invention as long as it pushes the to-be-sent information to a user who really needs or concerns the information for different user needs.

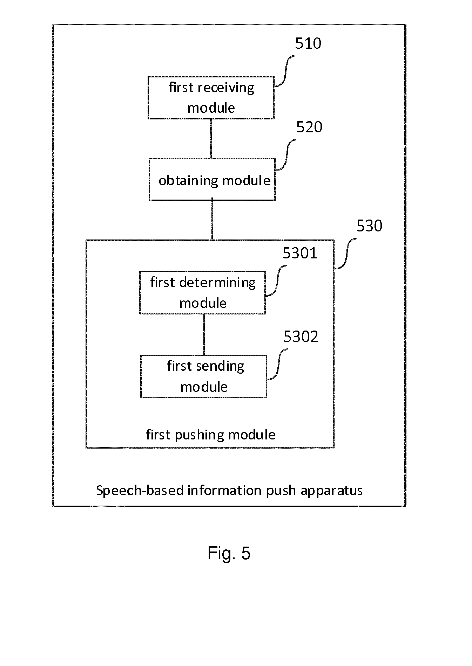

As shown in Fig. 5, the apparatus for speech-based information push according to the embodiments of the present invention comprises the following modules:
a module (hereinafter referred to as "a first receiving module") 510 configured to receive a speech;
a module (hereinafter referred to as "an obtaining module") 520 configured to extract at least one personalized feature from the speech;
a module (hereinafter referred to as "a first pushing module") 530 configured to push to-be-sent information to a user corresponding to the speech based on the at least one personalized feature.

Hereinafter, respective modules will be introduced in detail.

In the first receiving module 510, the speech may he speech may be speech inputted by a user through a man-machine interaction interface or a recording file as speech, or other form of speech. The embodiments of the present invention has no specific limitation on the manner of receiving the speech.

In the obtaining module 520, the personalized feature mainly includes tone, timber and/or loudness, wherein the tone is mainly determined by the frequency of the speech. Generally, the tone of a child is higher than an adult; the tone of a woman is higher than a man. The magnitude of loudness is determined by an amplitude of an object and a distance between a sounding object and a receiving object. The timber refers to a sensing feature of the speech. Due to the difference in the materials and structures of sounding bodies, the timbers of the speeches are also different. Alternatively, the personalized feature may also comprise a speed, vowel length, end word, and/or dialectic features, and the like, wherein the vowel length means a vowel may be pronounced longer or shorter by different users, the end word may be for example, " 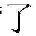 (Le,), 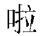 (La), which are modal particles," and the dialectic features may be for example, mixing of "l" and "n" in dialectics of a certain area of Hubei province, or indiscrimination of h and f in dialectics of Hunan or Fujian.

Alternatively, in one embodiment, the first pushing module 530 specifically may comprise the following modules:
a module (hereinafter referred to as "first determining module") 5301 configured to determine the user's feature information corresponding to the speech based on the at least one personalized feature.

Specifically, the user's feature information may include: gender, age, health condition, dialectic, nationality, education degree (e.g., PHD, bachelor, high school, or primary school, etc.), occupation (e.g., cook, journalist, lawyer, etc.) and/or sentimental color, etc. The present invention does not make specific limitations on the user's specific feature information, as long as it can distinguish users into different user groups.

Alternatively, the user's feature information corresponding to the speech may be directly determined based on at least one personalized feature. For example, the user's gender or age may be determined based on the loudness of the tone, i.e., it may be determined based on the loudness of the tone whether the user is a male or a female, or an adult or a child, etc.

Alternatively, a speech sample library may be established first. The speech samples of the speech sample library are samples on the users with respect to different genders, ages, health conditions, dialectics, nationalities, education degrees, occupations and/or sentimental colors, etc., and then each speech sample in the speech sample library generates a multi-dimensional vector based on the personalized feature, each dimension of the vector corresponds the user's one feature information. Likewise, a multi-dimensional vector is generated in the same manner based on the personalized feature after receiving the speech, and the user's feature information is determined based on the multi-dimensional vector, e.g., the multi-dimension vector corresponding to the speech is vector multiplied with multi-dimension vectors corresponding to respective speech samples in the sample library, and which speech sample is most suitable is determined by normalizing the vector products, thereby determining the user's feature information.

The embodiments of the present invention do not specifically limit the method of directly determining the user's feature information corresponding to the user based on at least one personalized feature, and any method is applicable to the present invention as long as it can determine the user's feature information based on at least one personalized feature in the speech.

A module (hereinafter referred to as "first sending module") 5302 configured to push to-be-sent information to the user corresponding to the speech based on the feature information of the user.

Specifically, if a first feature information corresponding to a first information in the to-be-sent information and the user's feature information are within a threshold range, the first information is pushed to the user corresponding to the speech.

Alternatively, each to-be-sent information is provided with the user's feature information or the user's feature information range; if the user's feature information corresponding to the speech and a user feature information set for the to-be-sent information are within the threshold range, or if the user feature information corresponding to the speech is within a user feature information range provided for the to-be-sent information, then the to-be-sent information is pushed to the user corresponding to the speech.

Alternatively, the to-be-sent information may also be pushed by multi-feature modeling, i.e., a weight variable is set for each user's feature information, and a quality score of each to-be-sent information is determined based on each user's feature information weight. Then each to-be-sent information is ordered based on their respective quality score and then pushed. With the increase of push results, the weight corresponding to each user's feature information is modified in real-time based on the push effect, so as to enhance the accuracy and preciseness of information pushing, thereby making the information push more accurate.

The embodiments of the present invention do not specifically limit the method of pushing the to-be-sent information to the user corresponding to the speech based on the user's feature information, and any method of pushing the to-be-sent information to a user who really needs or concerns the information may be applicable to the present invention as long as it can address different user needs.

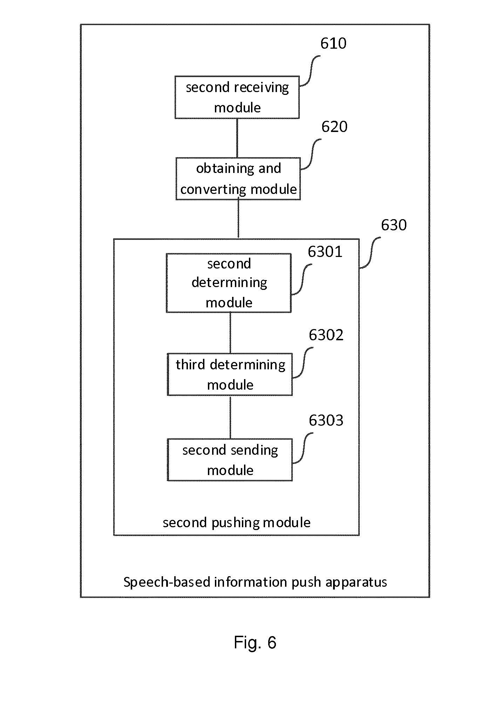

In conjunction with Fig. 6, a further apparatus for speech-based information push according to the present embodiment comprises the following modules: a module (hereinafter referred to as "second receiving module") 601 configured to receive speech;
a module (hereinafter referred to as "obtaining and converting module") 603 configured to extracting at least one personalized feature from the speech, and convert the speech into character information;
a module (hereinafter referred to as "second pushing module") 630 configured to push to-be-sent information to a user corresponding to the speech based on the character information and the at least one personalized feature.

Hereinafter, further detailed introduction will be made to respective modules.

In the second receiving module 610, the speech may be speech inputted by a user through a man-machine interaction interface or a recording file as speech, or other form of speech. The embodiments of the present invention has no specific limitation on the manner of receiving the speech.

In the obtaining and converting module 620, the procedure of extracting at least one personalized feature from the speech may comprise:
Specifically, personalized feature mainly includes tone, timber and/or loudness, wherein the tone is mainly determined by the frequency of the speech. Generally, the tone of a child is higher than an adult; the tone of a woman is higher than a man. The magnitude of loudness is determined by an amplitude of an object and a distance between a sounding object and a receiving object. The timber refers to a sensing feature of the speech. Due to the difference in the materials and structures of sounding bodies, the timbers of the speeches are also different. Alternatively, the personalized feature may also comprise a speed, vowel length, end word, and/or dialectic features, and the like, wherein the vowel length means a vowel may be pronounced longer or shorter by different users, the end word may be for example, " 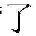 (Le,), 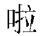 (La), which are modal particles," and the dialectic features may be for example, mixing of "l" and "n" in dialectics of a certain area of Hubei province, or indiscrimination of h and f in dialectics of Hunan or Fujian.

In the obtaining and converting module 620, the procedure of converting the speech into character information may be implemented by a speech recognition technology. The specific converting method is not specifically limited in the embodiments of the present invention, as long as the speech can be converted into characters.

Alternatively, in one embodiment, the second pushing module 630 may specifically comprise the following modules:
A module (hereinafter referred to as "second determining module") 6301 configured to determine, in the to-be-sent information, an information library associated with the text information.

Specifically, the user's feature information may include: gender, age, health condition, dialectic, nationality, education degree (e.g., PHD, bachelor, high school, or primary school, etc.), occupation (e.g., cook, journalist, lawyer, etc.) and/or sentimental color, etc. The present invention does not make specific limitations on the user's specific feature information, as long as it can distinguish users into different user groups.

Alternatively, the user's feature information corresponding to the speech may be directly determined based on at least one personalized feature. For example, the user's gender or age may be determined based on the loudness of the tone, i.e., it may be determined based on the loudness of the tone whether the user is a male or a female, or an adult or a child, etc. Alternatively, a speech sample library may be established first. The speech samples of the speech sample library are samples on the users with respect to different genders, ages, health conditions, dialectics, nationalities, education degrees, occupations and/or sentimental colors, etc., and then each speech sample in the speech sample library generates a multi-dimensional vector based on the personalized feature, each dimension of the vector corresponds the user's one feature information. Likewise, a multi-dimensional vector is generated in the same manner based on the personalized feature after receiving the speech, and the user's feature information is determined based on the multi-dimensional vector, e.g., the multi-dimension vector corresponding to the speech is vector multiplied with multi-dimension vectors corresponding to respective speech samples in the sample library, and which speech sample is most suitable is determined by normalizing the vector products, thereby determining the user's feature information.

The embodiments of the present invention do not specifically limit the method of directly determining the user's feature information corresponding to the user based on at least one personalized feature, and any method is applicable to the present invention as long as it can determine the user's feature information based on at least one personalized feature in the speech.

A module (hereinafter referred to as "third determining module") 6302 configured to determine, in the to-be-sent information, an information library associated with the text information.

Specifically, information, in the to-be-sent information, containing the text information may be used as an information library associated with the character information, or association degrees of the to-be-sent information with the text information according to a certain association degree calculation method may be ordered so as to use the information whose association degree is higher than a predetermined value as the information library associated with the text information. The present invention does not specifically limit the method of how to determine an information library associated with the character information, as long as any information having certain association with the character information may be put into the information library.

There is no limitation on the specific sequence of operations of the second determining module 6301 and third determining module 6302. The information library associated with the character information may be first determined, and then the user's feature information is determined; or, the user's feature information may be first determined, and then the information library associated with the character information may be determined; or, they may be determined simultaneously.

A module (hereinafter referred to as "second sending module") 6303 configured to push the to-be-sent information to the user corresponding to the speech based on the user's feature information determined by the second determining module 6301 and the information library associated with the character information determined by the third determining module 6302.

Alternatively, when the user's feature information is first determined, and then the information library associated with the character information is determined, there comprises:
Specifically, if the first feature information corresponding to a first information in the to-be-sent information and the user's feature information are within a threshold range, an information set satisfying the first information requirement is used as the information library associated with the user's feature information, and then in the information library associated with the user's feature information, an information library associated with the text information is further determined; finally, the to-be-sent information in the information library associated with the character information as determined in the information library associated with the feature information is pushed to the user corresponding to the speech.

Specifically, each to-be-sent information is provided with the user's feature information or the user's feature information range; if the user's feature information corresponding to the speech and a user feature information set for the to-be-sent information are within the threshold range, or if the user feature information corresponding to the speech is within a user feature information range provided for the to-be-sent information, it is determined that the to-be-sent information within the threshold range or within the user feature information range is used as the information library associated with the user's feature information, and then the information library associated with the character information is further determined in the information library associated with the user's feature information; and finally, the to-be-sent information in the information library associated with the character information as determined in the information library associated with the feature information is pushed to the user corresponding to the speech.

Alternatively, when the information library associated with character information is first determined, and then the user's feature information is determined, there comprises:
Specifically, if the first feature information corresponding to a first information in the information library associate with the character information and the user's feature information are within a threshold range, the to-be-sent information in the information set satisfying the first information requirement is pushed to the user corresponding to the speech.

Specifically, each to-be-sent information is provided with the user's feature information or the user's feature information range; if the user's feature information corresponding to the speech and a user feature information set for the to-be-sent information are within the threshold range, or if the user feature information corresponding to the speech is within a user feature information range provided for the to-be-sent information in the information library associated with the character information, then it is determined to push the to-be-sent information within the threshold range or within the user feature information range to the user corresponding to the speech.

Alternatively, the to-be-sent information may also be pushed by multi-feature modeling, i.e., a weight variable is set for each user's feature information, and a quality score of each to-be-sent information is determined based on each user's feature information weight. Then each to-be-sent information is ordered based on their respective quality score and then pushed. With the increase of push results, the weight corresponding to each user's feature information is modified in real-time based on the push effect, so as to enhance the accuracy and preciseness of information pushing, thereby making the information push more accurate.

The embodiments of the present invention do not specifically limit the method of pushing the to-be-sent information to the user corresponding to the speech based on the user's feature information, and any method of pushing the to-be-sent information to a user who really needs or concerns the information may be applicable to the present invention as long as it can address different user needs.

Alternatively, when the user's feature information and the information library associated with the character information are simultaneously determined, comprising:
Specifically, if the first feature information corresponding to a first information in the to-be-sent information and the user's feature information are within a threshold range, an information set satisfying the first information requirement is used as the information library associated with the user's feature information, and then after the information library associated with the user's feature information is intersected with the information library associated with the character information, the to-be-sent information in the intersection is pushed to the user corresponding to the speech.

Alternatively, each to-be-sent information is provided with the user's feature information or the user's feature information range; if the user's feature information corresponding to the speech and a user feature information set for the to-be-sent information are within the threshold range, or if the user feature information corresponding to the speech is within a user feature information range provided for the to-be-sent information, it is determined that the to-be-sent information within the threshold range or within the user feature information range is used as the information library associated with the user's feature information, and then the information library associated with the user's feature information is intersected with the information library associated with the character information; and finally, the to-be-sent information in the intersection is pushed to the user corresponding to the speech.

The embodiments of the present invention does not specifically limit a method of pushing the to-be-sent information based on the characteristic information and the at least one personalized feature, and any method may be applicable to the present invention as long as it pushes the to-be-sent information to a user who really needs or concerns the information for different user needs.

The speech-based information push methods and apparatuses according to the embodiments of the present invention achieves a more accurate speech-based search service; by extracting personalized feature beyond the characters, the user's feature information is determined so as to perform targeted information push and service based on the user's feature information such as gender, age, etc., thereby enhancing the accuracy of service results; they may perform more targeted personalized services based on different user features, enhance the accuracy of information push, satisfy the user's personalized needs, and improves user experience. Meanwhile, pushing information based on the character information in the speech and the user's feature information further improves the accuracy of push for different user needs. The embodiments of the present invention may include, but not limited: speech search, speech shopping, speech navigation, and information push based on information obtained from speech call content or speech group chat, etc., for example, obtaining personalized feature and character information based on speech in the group chat, and determining that the user's feature information is a 5-year-old little girl, such that information related to English learning is pushed to the little girl.

It should be noted that the present disclosure may be implemented in software or a combination of software and hardware; for example, it may be implemented by a dedicated integrated circuit (ASIC), a general-purpose computer, or any other similar hardware device. In an embodiment, the software program of the present disclosure may be executed by a processor so as to implement the above steps or functions. Likewise, the software program of the present disclosure (including relevant data structure) may be stored in a computer readable recording medium, for example, a RAM memory, a magnetic or optical driver, or a floppy disk, and similar devices. Besides, some steps of functions of the present disclosure may be implemented by hardware, for example, a circuit cooperating with the processor to execute various functions or steps.

Further, a portion of the present disclosure may be applied as a computer program product, for example, a computer program instruction, which, when executed by the computer, may invoke or provide a method and/or technical solution according to the present disclosure through operations of the computer. Further, the program instruction invoking the method of the present disclosure may be stored in a fixed or mobile recording medium, and/or transmitted through broadcast or data flow in other signal bearer media, and/or stored in a working memory of a computer device which operates based on the program instruction. Here, in an embodiment according to the present disclosure, an apparatus comprises a memory for storing a computer program instruction and a processor for executing the program instruction, wherein when the computer program instruction is executed by the processor, the apparatus is triggered to run the methods and/or technical solutions according to a plurality of embodiments of the present disclosure.

To those skilled in the art, it is apparent that the present disclosure is not limited to the details of the above exemplary embodiments, and the present disclosure may be implemented with other forms without departing from the spirit or basic features of the present disclosure. Thus, in any way, the embodiments should be regarded as exemplary, not limitative; the scope of the present disclosure is limited by the appended claims, instead of the above depiction. Thus, all variations intended to fall into the meaning and scope of equivalent elements of the claims should be covered within the present disclosure. No reference signs in the claims should be regarded as limiting the involved claims. Besides, it is apparent that the term "comprise/comprising/include/including" does not exclude other units or steps, and singularity does not exclude plurality. A plurality of units or means stated in the apparatus claims may also be implemented by a single unit or means through software or hardware. Terms such as the first and the second are used to indicate names, but do not indicate any particular sequence.

Various aspects of various embodiments are defined in the Claims. And these and other aspects of various embodiments are defined in the following numbered clauses:
1. A method for speech-based information push, comprising:
   receiving a speech;
   extracting at least one personalized feature from the speech;
   pushing to-be-sent information to a user corresponding to the speech
   based on the at least one personalized feature.
2. The method according to clause 1, wherein the step of pushing to-be-sent information to a user corresponding to the speech based on the at least one personalized feature comprises:
   converting the speech into character information;
   pushing to-be-sent information to the user corresponding to the speech based on the character information and the at least one personalized feature.
3. The method according to clause 1, wherein the step of pushing to-be-sent information to a user corresponding to the speech based on the at least one personalized feature comprises:
   determining the user's feature information corresponding to the speech based on the at least one personalized feature, the personalized feature comprises a tone, a timber, and/or a loudness;
   pushing to-be-sent information to the user corresponding to the speech based on the user's feature information.
4. The method according to clause 3, wherein the step of pushing to-be-sent information to the user corresponding to the speech based on the user's feature information comprises:
   if a first feature information corresponding to a first information in the to-be-sent information and the user's feature information are within a threshold range, pushing the first information to the user corresponding to the speech.
5. The method according to clause 2, wherein the step of pushing to-be-sent information to the user corresponding to the speech based on the character information and the at least one personalized feature comprises:
   determining the user's feature information corresponding to the speech based on the at least one personalized feature, the personalized feature comprising tone, timber and/or loudness;
   determining an information library associated with the character information in the to-be-sent information, and if the first feature information corresponding to the first information in the information library and the user's feature information are within a threshold range, pushing the first information to a user corresponding to the speech.
6. An apparatus for speech-based information push, comprising:
   a module configured to receive a speech;
   a module configured to extract at least one personalized feature from the speech;
   a module configured to push to-be-sent information to a user corresponding to the speech based on the at least one personalized feature.
7. The apparatus according to clause 6, wherein the module configured to push to-be-sent information to a user corresponding to the speech based on the at least one personalized feature comprises:
   a module configured to convert the speech into character information;
   a module configured to push to-be-sent information to the user corresponding to the speech based on the character information and the at least one personalized feature.
8. The apparatus according to clause 6, wherein the module configured to push to-be-sent information to a user corresponding to the speech based on the at least one personalized feature comprises:
   a module configured to determine the user's feature information corresponding to the speech based on the at least one personalized feature, the personalized feature comprises a tone, a timber, and/or a loudness;
   a module configured to push to-be-sent information to the user corresponding to the speech based on the user's feature information.
9. The apparatus according to clause 8, wherein the module configured to push to-be-sent information to the user corresponding to the speech based on the user's feature information comprises:
   a module configured to, if a first feature information corresponding to a first information in the to-be-sent information and the user's feature information are within a threshold range, push the first information to the user corresponding to the speech.
10. The apparatus according to clause 7, wherein the module configured to push to-be-sent information to the user corresponding to the speech based on the character information and the at least one personalized feature comprises:
   a module configured to determine the user's feature information corresponding to the speech based on the at least one personalized feature, the personalized feature comprising tone, timber and/or loudness;
   a module configured to determine an information library associated with the character information in the to-be-sent information, and if the first feature information corresponding to the first information in the information library and the user's feature information are within a threshold range, pushing the first information to a user corresponding to the speech.

## Claims

1. A method for speech-based information push, comprising:
receiving a speech;
extracting at least one personalized feature from the speech;
pushing to-be-sent information to a user corresponding to the speech based on the at least one personalized feature.

2. The method according to claim 1, wherein the step of pushing to-be-sent information to a user corresponding to the speech based on the at least one personalized feature comprises:
converting the speech into character information;
pushing to-be-sent information to the user corresponding to the speech based on the character information and the at least one personalized feature.

3. The method according to claim 1, wherein the step of pushing to-be-sent information to a user corresponding to the speech based on the at least one personalized feature comprises:
determining the user's feature information corresponding to the speech based on the at least one personalized feature, the personalized feature comprises a tone, a timber, and/or a loudness;
pushing to-be-sent information to the user corresponding to the speech based on the user's feature information.

4. The method according to claim 3, wherein the step of pushing to-be-sent information to the user corresponding to the speech based on the user's feature information comprises:
if a first feature information corresponding to a first information in the to-be-sent information and the user's feature information are within a threshold range, pushing the first information to the user corresponding to the speech.

5. The method according to claim 2, wherein the step of pushing to-be-sent information to the user corresponding to the speech based on the character information and the at least one personalized feature comprises:
determining the user's feature information corresponding to the speech based on the at least one personalized feature, the personalized feature comprising tone, timber and/or loudness;
determining an information library associated with the character information in the to-be-sent information, and if the first feature information corresponding to the first information in the information library and the user's feature information are within a threshold range, pushing the first information to a user corresponding to the speech.

6. An apparatus for speech-based information push, comprising:
a module configured to receive a speech;
a module configured to extract at least one personalized feature from the speech;
a module configured to push to-be-sent information to a user corresponding to the speech based on the at least one personalized feature.

7. The apparatus according to claim 6, wherein the module configured to push to-be-sent information to a user corresponding to the speech based on the at least one personalized feature comprises:
a module configured to convert the speech into character information;
a module configured to push to-be-sent information to the user corresponding to the speech based on the character information and
the at least one personalized feature.

8. The apparatus according to claim 6, wherein the module configured to push to-be-sent information to a user corresponding to the speech based on the at least one personalized feature comprises:
a module configured to determine the user's feature information corresponding to the speech based on the at least one personalized feature, the personalized feature comprises a tone, a timber, and/or a loudness;
a module configured to push to-be-sent information to the user corresponding to the speech based on the user's feature information.

9. The apparatus according to claim 8, wherein the module configured to push to-be-sent information to the user corresponding to the speech based on the user's feature information comprises:
a module configured to, if a first feature information corresponding to a first information in the to-be-sent information and the user's feature information are within a threshold range, push the first information to the user corresponding to the speech.

10. The apparatus according to claim 7, wherein the module configured to push to-be-sent information to the user corresponding to the speech based on the character information and the at least one personalized feature comprises:
a module configured to determine the user's feature information corresponding to the speech based on the at least one personalized feature, the personalized feature comprising tone, timber and/or loudness;
a module configured to determine an information library associated with the character information in the to-be-sent information, and if the first feature information corresponding to the first information in the information library and the user's feature information are within a threshold range, pushing the first information to a user corresponding to the speech.

11. A computer readable storage media, said computer readable storage media comprising computer code, when said computer code executed, the method according to any one of claims 1 to 5 is executed.

12. A computer program product, when said computer program product executed by a computer device, the method according to any one of claims 1 to 5 is executed.

13. A computer device, said computer device comprising a memory and a processor, said memory stores computer code, and said processor is configured to execute the method according to any one of claims 1 to 5 by executing said computer code.
